# DEMANDE DE BREVET EUROPEEN

(11) **EP 1 626 355 A1**
(43) Date de publication de la demande: **15.02.2006**
(21) Numéro de dépôt: 05106870.8
(22) Date de dépôt: 26.07.2005
(51) Int. Cl.: G06F 17/30, G09B 29/00

(54) **Procédé d'affichage d'une carte et d'accès à des ressources d'information relatives aux endroits figurant sur cette carte**

(30) Priorité: 09.08.2004 FR 0408777
(71) Demandeur: ALCATEL, 75008 Paris (FR)
(72) Inventeur: DAURENSAN, Véronique, 92160, ANTONY (FR)

(57) **Abrégé**

L'invention concerne un procédé comprenant : une étape d'envoi, par un serveur d'un réseau de communications, de la carte d'un lieu, à un téléphone portable ; une étape d'affichage principal, sur l'écran du téléphone portable, de la carte (1) et d'icones principaux (2) représentant des endroits particuliers situés sur la carte ; une étape d'affichage secondaire, à la suite d'une sélection d'un icone principal (2) par l'utilisateur du téléphone portable, sur l'écran du téléphone portable, de plusieurs icones secondaires (3) correspondant respectivement à des ressources d'information relatives à l'endroit correspondant audit icone principal (2) sélectionné, l'étape d'affichage secondaire nécessitant, de la part de l'utilisateur du téléphone portable, uniquement ladite sélection dudit icone principal (2) ; une étape de mise en communication, à la suite d'une sélection dudit icone secondaire (3) par l'utilisateur du téléphone portable, avec la ressource d'information correspondant audit icone secondaire (3) sélectionné, l'étape de mise en communication nécessitant, de la part de l'utilisateur du téléphone portable, uniquement ladite sélection dudit icone secondaire (3).

## Description

L'invention concerne le domaine des procédés d'affichage de carte contenant des endroits et d'accession à des ressources d'information relatives à ces endroits. L'invention concerne également le téléphone portable destiné à mettre en oeuvre le procédé selon l'invention ainsi que le serveur d'application destiné à mettre en oeuvre le procédé selon l'invention.

Selon un art antérieur, par exemple décrit dans les documents suivants, demande de brevet européen EP 1189027, demande de brevet européen EP875729, demande de brevet européen EP 642108, Patent Abstract of Japan JP09329516, Patent Abstract of Japan JP 07266700, brevet américain US6385465, brevet américain US 5289572, demande de brevet américain US2002/01 73906, il est connu des procédés d'affichage de carte contenant des endroits et d'accession à des ressources d'information relatives à ces endroits. Ces arts antérieurs présentent l'inconvénient d'un procédé relativement long et complexe pour que l'utilisateur puisse accéder à la ressource d'information voulue, nécessitant souvent, en plus d'un téléphone portable, un dispositif de navigation automobile, ou ne concernant parfois qu'une seule ressource d'information par endroit, ce qui est trop limité.

L'invention propose un procédé relativement plus simple et rapide permettant à l'utilisateur d'accéder à l'information à l'aide de son seul téléphone portable.

Selon l'invention, il est prévu un procédé comprenant : une étape d'envoi, par un serveur d'un réseau de communications, de la carte d'un lieu, à un téléphone portable ; une étape d'affichage principal, sur l'écran du téléphone portable, de la carte et d'icones principaux représentant des endroits particuliers situés sur la carte ; une étape d'affichage secondaire, pour au moins un icone principal, à la suite d'une sélection dudit icone principal par l'utilisateur du téléphone portable, sur l'écran du téléphone portable, de plusieurs icones secondaires correspondant respectivement à des ressources d'information relatives à l'endroit correspondant audit icone principal sélectionné, au moins deux des ressources d'information étant distinctes entre elles et étant joignables par le téléphone portable par l'intermédiaire du serveur à l'aide de moyens de communication distincts entre eux, l'étape d'affichage secondaire nécessitant, de la part de l'utilisateur du téléphone portable, uniquement ladite sélection dudit icone principal ; une étape de mise en communication, pour au moins un icone secondaire correspondant à l'une desdites ressources d'information qui sont distinctes entre elles et qui sont joignables par le téléphone portable par l'intermédiaire du serveur à l'aide de moyens de communication distincts entre eux, à la suite d'une sélection dudit icone secondaire par l'utilisateur du téléphone portable, avec la ressource d'information correspondant audit icone secondaire sélectionné, par l'intermédiaire du serveur à l'aide du moyen de communication correspondant à la ressource d'information correspondant audit icone secondaire sélectionné, l'étape de mise en communication nécessitant, de la part de l'utilisateur du téléphone portable, uniquement ladite sélection dudit icone secondaire.

L'invention sera mieux comprise et d'autres particularités et avantages apparaîtront à l'aide de la description ci-après et des dessins joints, donnés à titre d'exemples, où :

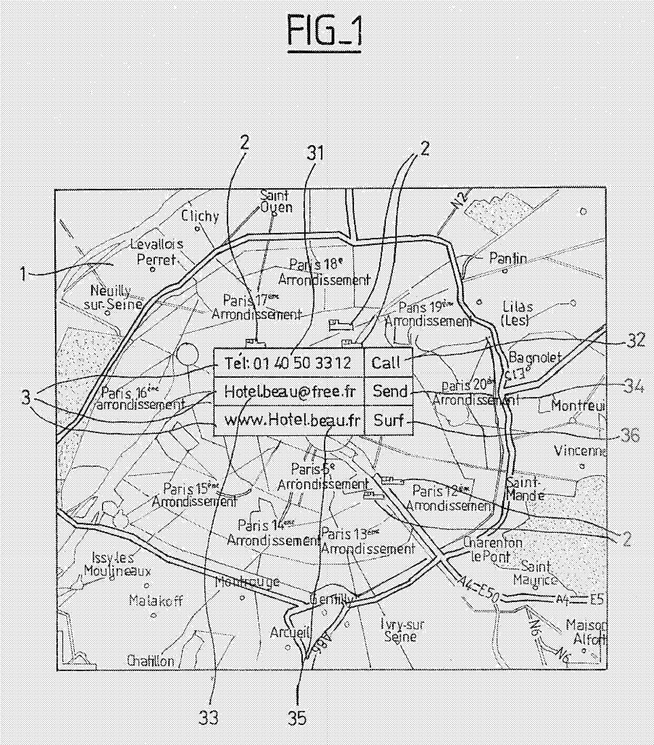

- la figure 1 représente schématiquement un affichage d'une carte sur l'écran d'un téléphone portable à l'aide du procédé selon l'invention.

La figure 1 représente schématiquement un affichage d'une carte sur l'écran d'un téléphone portable à l'aide du procédé selon l'invention. Un serveur d'application d'un réseau de communications envoie à un téléphone portable une carte 1 représentant un lieu, par exemple une ville. La carte 1 peut représenter le lieu ou se trouve l'utilisateur du téléphone portable ou bien un autre lieu quelconque qu'il lui suffira de demander au serveur. Le téléphone portable affiche sur son écran la carte 1 ainsi que des icones principaux 2 représentant des endroits particuliers situés dans la ville, par exemple des hôtels, des restaurants, des musées, etc ... A partir de ce moment, l'utilisateur peut déplacer un curseur sur l'écran et valider la position du curseur lorsque celui-ci passe sur un icone principal 2 de préférence ou du moins au voisinage de cet icone principal 2. Lorsqu'un icone principal 2 est sélectionné, une famille d'icones secondaires 3 représentant des ressources d'information relatives à l'endroit correspondant à l'icone principal 2 sélectionné est affichée. Chaque icone secondaire 3 représente une ressource d'information donnée correspondant à un moyen de communication donné par lequel le téléphone portable va pouvoir joindre la ressource d'information correspondante. Ici, pour l'icone principal 2 sélectionné, trois icones secondaires 3 sont affichés. Chaque icone secondaire 3 se compose par exemple de deux parties, une partie à gauche décrivant la ressource d'information, une partie à droite décrivant le moyen de communication permettant d'accéder à la ressource d'information représentée par l'icone secondaire 3. La ressource d'information 31 correspond à un numéro téléphonique d'un hôtel auquel l'utilisateur peut accéder par le moyen de communication 32 qui est un appel téléphonique. La ressource d'information 33 correspond à une adresse de courrier électronique de l'hôtel à laquelle l'utilisateur peut accéder par le moyen de communication 34 qui est un envoi de courrier électronique. La ressource d'information 35 correspond à une adresse de site Internet de l'hôtel auquel l'utilisateur peut accéder par le moyen de communication 36 qui est une demande de navigation sur ce site Internet Il suffit par exemple à l'utilisateur de cliquer sur la case 31 ou sur la case 32 pour que le numéro de téléphone affiché sur la case 31 soit directement appelé par le téléphone portable de l'utilisateur sans que celui-ci ait à composer lui-même ledit numéro sur son téléphone portable. De même, par simple clic sur les cases 33 ou 34, l'utilisateur peut envoyer directement un courrier électronique à hôtel (ou accéder à un format de courrier électronique comprenant déjà l'adresse de l'hôtel et dont il n'aura plus qu'à compléter le corps du texte sous la forme d'un SMS par exemple). De même encore, par simple clic sur les cases 35 ou 36, l'utilisateur peut accéder directement au site Internet de l'hôtel Ici, les trois icones secondaires 3 constituent trois ressources d'information distinctes entre elles, téléphone, courrier électronique et site Internet, accessibles par trois moyens de communication distincts entre eux, communication téléphonique vocale, transmission de courrier électronique, lien vers un site Internet sur lequel l'utilisateur pourra ensuite naviguer. Seules les simples sélections des icones principaux 2 et les simples sélections des icones secondaires 3 sont nécessaires à l'utilisateur pour accéder à toutes les ressources d'information concernant tous les endroits représentés sur la carte 1 par des icones principaux.

De préférence, l'étape d'affichage secondaire peut être réalisée pour plusieurs icones principaux, voire encore plus avantageusement pour tous les icones principaux représentés sur la carte. De manière également avantageuse, l'étape de mise en communication peut être réalisée pour tous les icones secondaires de plusieurs icones principaux, voire encore plus avantageusement pour tous les icones secondaires de tous les icones principaux.

De préférence, la sélection consiste en d'une part le déplacement d'un curseur au niveau de l'un des icones et en d'autre part une validation de la position du curseur déplacé. La validation consiste avantageusement en une pression unique sur une touche unique. Ce pourrait être aussi une double pression successive sur la même touche par exemple. Un autre type de sélection encore plus simple peut être envisagé à l'aide d'un stylet de contact tenu en main par l'utilisateur, lequel stylet valide l'icone par simple contact sur la partie correspondante de l'écran qui représente ledit icone.

De préférence, l'un des moyens de communication est la communication vocale. C'est là que l'invention est la plus avantageuse ; en effet, le téléphone portable est l'unique appareil dont l'utilisateur a besoin, tandis qu'alors dans le cas de l'art antérieur utilisant un système de navigation automobile, il lui faut le système de navigation automobile, le téléphone portable, et soit un lien électronique entre les deux, soit la nécessité pour l'utilisateur de composer lui-même le numéro téléphonique sur son téléphone portable après l'avoir lu sur le système de navigation automobile.

De préférence, le procédé est réalisé à l'aide d'une application Java localisée sur le téléphone portable. Cette application Java assure directement le lien entre le serveur d'application et l'écran du téléphone portable.

## Revendications

1. Procédé comprenant :
- une étape d'envoi, par un serveur d'un réseau de communications, de la carte (1) d'un lieu, à un téléphone portable ;
- une étape d'affichage principal, sur l'écran du téléphone portable, de la carte et d'icones principaux (2) représentant des endroits particuliers situés sur la carte ;
- une étape d'affichage secondaire, pour au moins un icone principal, à la suite d'une sélection dudit icone principal par l'utilisateur du téléphone portable, sur l'écran du téléphone portable, de plusieurs icones secondaires (3) correspondant respectivement à des ressources d'information relatives à l'endroit correspondant audit icone principal sélectionné, au moins deux des ressources d'information étant distinctes entre elles et étant joignables par le téléphone portable par l'intermédiaire du serveur à l'aide de moyens de communication distincts entre eux, l'étape d'affichage secondaire nécessitant, de la part de l'utilisateur du téléphone portable, uniquement ladite sélection dudit icone principal ;
- une étape de mise en communication, pour au moins un icone secondaire correspondant à l'une desdites ressources d'information qui sont distinctes entre elles et qui sont joignables par le téléphone portable par l'intermédiaire du serveur à l'aide de moyens de communication distincts entre eux, à la suite d'une sélection dudit icone secondaire par l'utilisateur du téléphone portable, avec la ressource d'information correspondant audit icone secondaire sélectionné, par l'intermédiaire du serveur à l'aide du moyen de communication correspondant à la ressource d'information correspondant audit icone secondaire sélectionné, l'étape de mise en communication nécessitant, de la part de l'utilisateur du téléphone portable, uniquement ladite sélection dudit icone secondaire.

2. Procédé selon la revendication 1, **caractérisé en ce que** l'étape d'affichage secondaire peut être réalisée pour plusieurs icones principaux.

3. Procédé selon l'une quelconque des revendications précédentes, **caractérisé en ce que** l'étape de mise en communication peut être réalisée pour tous les icones secondaires de plusieurs icones principaux.

4. Procédé selon l'une quelconque des revendications précédentes, **caractérisé en ce que** la sélection consiste en d'une part le déplacement d'un curseur au niveau de l'un des icones et en d'autre part une validation de la position du curseur déplacé.

5. Procédé selon la revendication 4, **caractérisé en ce que** la validation consiste en une pression unique sur une touche unique.

6. Procédé selon l'une quelconque des revendications précédentes, **caractérisé en ce que** l'un des moyens de communication est la communication vocale.

7. Procédé selon l'une quelconque des revendications précédentes, **caractérisé en ce que** le procédé est réalisé à l'aide d'une application Java localisée sur le téléphone portable.

8. Téléphone portable destiné à la mise en oeuvre du procédé selon l'une quelconque des revendications précédentes.

9. Serveur d'application destiné à la mise en oeuvre du procédé selon l'une quelconque des revendications 1 à 7.
